# EUROPEAN PATENT SPECIFICATION

(11) **EP 2 233 279 B1**
(45) Date of publication and mention of the grant of the patent: **25.10.2017**
(21) Application number: 10157163.6
(22) Date of filing: 22.03.2010
(51) Int. Cl.: B29C 65/52, D06H 5/00, A41H 43/04

(54) **Cloth bonding apparatus**
Vorrichtung zum Verbinden vom Stoff
Appareil de liaison de tissus

(30) Priority: 25.03.2009 JP 2009074786
(43) Date of publication of application: 29.09.2010
(73) Proprietor: Brother Kogyo Kabushiki Kaisha, Nagoya-shi, Aichi 467-8561 (JP)
(72) Inventor: Umeda, Kazutoshi, Nagoya-shi Aichi 467-8562 (JP); Ohmura Yoshikazu, Nagoya-shi Aichi 467-8562 (JP); Yoshimoto, Naoki, Nagoya-shi Aichi 467-8562 (JP); Tada, Satoru, Nagoya-shi Aichi 467-8562 (JP); Enya, Tetsuji, Nagoya-shi Aichi 467-8562 (JP); Yamaura, Hiroki, Nagoya-shi Aichi 467-8562 (JP); Iwakoshi, Hiroyasu, Nagoya-shi Aichi 467-8562 (JP)
(74) Representative: Prüfer & Partner mbB Patentanwälte · Rechtsanwälte

(56) References cited:
- EP-A1- 2 216 163
- WO-A1-01/89812
- FR-A1- 2 437 932
- JP-B- 48 018 955
- US-A1- 2003 010 439

## Description

### BACKGROUND

The present invention relates to a cloth bonding apparatus. More specifically, the present invention relates to a cloth bonding apparatus including a feeding portion that feeds a cloth.

A bonding apparatus is directed for bonding cloths with an adhesive, instead of sewing the cloths with a needle and a thread. By bonding the cloths with the adhesive, the bonding apparatus can eliminate unevenness due to the thread that may be formed in the cloth surfaces when the cloths are sewn with the thread. The cloth surfaces processed by the bonding apparatus are smooth. Thus, the bonding apparatus is capable of manufacturing clothes and the like which are free from discomfort caused by unevenness.

The bonding apparatus heats an adhesive to be liquid and discharges a liquid adhesive from a nozzle. The adhesive discharged from the nozzle adheres onto one of cloths. The worker then places another cloth onto top of the cloth on which the adhesive has been applied. The bonding apparatus presses the cloths in a pressurized manner. The cloths are thus bonded together..

The bonding apparatus may need to discharge an adhesive onto an end of one cloth and bond the end with an end of another cloth. For example, with the apparatus described in Japanese Patent Application Laid-Open Publication No. 2002-104318, a roller is provided opposite to an adherend relative to a nozzle. The adherend is a paper band. A pullout device feeds the paper band. The apparatus can discharge an adhesive onto an end of the paper band.

### SUMMARY

However, the above-described apparatus additionally needs the pullout device that feeds the paper band, and a pressing device that bonds the adhesive-applied paper band to a paper box. Therefore, it is difficult for the apparatus to discharge an adhesive onto an end of a cloth and to feed and bond the cloth with another cloth.

WO 01/89812 A1 discloses a generic cloth bonding apparatus comprising the features of the preambles of claims 1 and 7; respectively.

Other cloth bonding apparatuses are known from FR 2 437 932 A1; US 2003/010439 A1 and JP 48 018955 B.

It is the object of the present invention to provide a cloth bonding apparatus, which is capable to bond cloths of different thickness without manually adjusting the position of the transmitting portion, wherein the cloth bonding apparatus can be simplified in its configuration and the cloth bonding apparatus can thus be made smaller.

This object is achieved by the cloth bonding apparatus having the features of claims 1 and 7, respectively. Advantageous further developments are defined in the dependent claims.

The cloth bonding apparatus according to the present invention includes a nozzle through which an adhesive is dischargeable onto a cloth, and a feeding portion that is adapted to feed the cloth, wherein the feeding portion comprises a first feeding portion that is provided on a downstream side of the nozzle in a feeding direction of the cloth and positioned on a first side relative to the cloth to be fed, a second feeding portion that is provided opposite to the first feeding portion and positioned on a second side, the second side being the other side opposite to the first side relative to the cloth, a third feeding portion that is provided at a nozzle position or at an upstream side of the nozzle position in the feeding direction, the nozzle position being a position on the second side opposite to the nozzle, a drive portion that drives the second feeding portion or the third feeding portion, and a transmitting portion that transmits a drive force of the second feeding portion driven by the drive portion to the third feeding portion, or transmits a drive force of the third feeding portion driven by the drive portion to the second feeding portion.

The first feeding portion feeds the cloth at the downstream side of the feeding direction relative to the nozzle. The second feeding portion feeds the cloth at a position opposite to the first feeding portion. The third feeding portion feeds the cloth in the vicinity of the nozzle. Thus, in the cloth bonding apparatus, even if an end of the cloth arranged at the side in the feeding direction downstream end of the cloth has not reached the first feeding portion and the second feeding portion, the third feeding portion can feed the cloth. The cloth bonding apparatus can discharge the adhesive to the downstream end of the cloth and bond the downstream end of the cloth with an end of another layer of cloth.

In the cloth bonding apparatus, the first feeding portion comprises a roller, the second feeding portion comprises a first pulley that is provided opposite to the roller, the third feeding portion comprises a second pulley, and the transmitting portion comprises a belt crossed between the first pulley and the second pulley.

In this case, the belt is provided between the lower side of the nozzle and the lower side of the roller. The cloth bonding apparatus drive the at least one of the first pulley and the second pulley to rotate, thereby continuously feeding the cloth from the lower side of the nozzle toward the lower side of the roller and leading the cloth to the roller. The cloth bonding apparatus can sandwich the cloth with the roller and the belt and press and bond the cloth with another layer of cloth.

In the cloth bonding apparatus, the third feeding portion further comprises an urging mechanism that urges the second pulley toward the nozzle, the urging mechanism comprises an arm mechanism that rotatably supports the second pulley at an end portion thereof and swings about a rotary shaft of the first pulley, and a spring that is connected to the arm mechanism.

In this case, the cloth bonding apparatus can press the cloth to the nozzle with a constant force with a simple configuration. The spring automatically adjusts the position of the belt even when the thickness of the cloth has changed. Therefore, the worker may not need to manually adjust the position of the belt even when the thickness of the cloth has changed. The arm mechanism swings about the rotary shaft of the second pulley. A distance between the first pulley and the second pulley is always constant. Thus, the first pulley and the second pulley do not contact each other even when the second pulley swings. The swing shaft of the arm mechanism can be shared with the rotary shaft of the second pulley. Therefore, the cloth bonding apparatus can be simplified in its configuration and the cloth bonding apparatus can thus be made smaller.

The cloth bonding apparatus may further comprise a stopper that restricts the arm mechanism from swinging to thereby restrict the second pulley from moving toward the nozzle. In this case, the cloth bonding apparatus can prevent a failure that the adhesive cannot be uniformly applied to the cloth due to strong press of the cloth to the nozzle.

In the cloth bonding apparatus, the stopper may adjust a swingable range of the arm mechanism. In this case, the cloth bonding apparatus can adjust a gap between the nozzle and the second feeding portion. Therefore, the worker can easily insert the cloth between the nozzle and the second feeding portion when starting the bonding operation.

In the cloth bonding apparatus, the stopper may comprise an air cylinder. In this case, the cloth bonding apparatus can adjust the swingable range of the arm mechanism by adjusting the air cylinder.

In the cloth bonding apparatus, a flange may be provided to at least one of the first pulley and the second pulley. In this case, the cloth bonding apparatus can prevent the belt from coming off the pulley.

In the cloth bonding apparatus, a height of the flange may be lower than a thickness of the belt crossed between the first pulley and the second pulley. In this case, the belt projects outward in the radial direction from the flange. The belt contacts the cloth. Thus, the cloth bonding apparatus can reliably feed the cloth by a frictional force between the belt and the cloth.

In another cloth bonding apparatus comprising the features of the preamble of claim 7, the first feeding portion further comprises a first roller, the second feeding portion comprises a second roller that is provided opposite to the first roller, the third feeding portion comprises a third roller that is provided opposite to the nozzle, the drive portion drives the second roller to rotate, the transmitting portion comprises a fourth roller that can be arranged to contact with the second roller and the third roller, and in a state in which the second roller and the third roller are in contact with the fourth roller, the drive portion drives the second roller to rotate, the second roller rotates the fourth roller, and the fourth roller rotates the third roller, so that a rotation drive force of the drive portion is transmitted to the third roller.

In this case, the cloth bonding apparatus can sandwich and feed the cloth by the first roller and the second roller. The third roller can press the cloth to the nozzle. The drive portion drives the second roller to rotate, thereby rotating the third roller. The cloth bonding apparatus can feed the cloth by the second roller and the third roller. The fourth roller can transmit a rotation drive force of the second roller to the third roller.

In the other cloth bonding apparatus, the third feeding portion further comprises an urging mechanism that urges the third roller toward the nozzle, the urging mechanism comprises a first arm mechanism that rotatably supports the third roller at an end portion thereof and swings about a rotary shaft of the second roller, and a spring that is connected to the first arm mechanism.

In this case, the cloth bonding apparatus can press the cloth to the nozzle with a constant force with a simple configuration. The spring automatically adjusts the position of the third roller even when the thickness of the cloth has changed. Therefore, the worker may not need to manually adjust the position of the third roller even when the thickness of the cloth has changed. The first arm mechanism swings about the rotary shaft of the second roller. A distance between the second roller and the third roller is always constant. Thus, the second roller and the third roller do not contact each other even when the third roller swings. The swing shaft of the first arm mechanism can be shared with the rotary shaft of the second roller. Therefore the cloth bonding apparatus can be simplified in its configuration and the cloth bonding apparatus can thus be made smaller.

The cloth bonding apparatus may further comprise a stopper that restricts the first arm mechanism from swinging to thereby restrict the third roller from moving toward the nozzle. In this case, the cloth bonding apparatus can prevent a failure that the adhesive cannot be uniformly adhered to the cloth due to strong press of the cloth to the nozzle.

In the cloth bonding apparatus, the stopper may adjust a swingable range of the first arm mechanism. In this case, the cloth bonding apparatus may adjust a gap between the nozzle and the third roller. Therefore, the worker can easily insert the cloth between the nozzle and the third roller when starting the bonding operation.

In the cloth bonding apparatus, the stopper may comprise an air cylinder The cloth bonding apparatus can adjust the swingable range of the first arm mechanism by adjusting the air cylinder.

In the cloth bonding apparatus, the transmitting portion may comprise a second arm mechanism that rotatably supports the fourth roller at an end portion thereof and swings about the rotary shaft of the second roller. In this case, the second roller can drive the fourth roller to rotate. The cloth bonding apparatus can switch a contact state and a non-contact state for the fourth roller and the third roller. Therefore, the cloth bonding apparatus can switch a rotation state and a non-rotation state for the third roller.

The cloth bonding apparatus may further comprise a moving portion that moves the second arm mechanism to a position where the third roller and the fourth roller contact each other and to a position where the third roller and the fourth roller do not contact each other. In this case, the moving portion can switch the rotation state and the non-rotation state for the third roller.

### BRIEF DESCRIPTION OF THE DRAWINGS

Fig. 1 is an upper front perspective view of a cloth bonding apparatus 1;
Fig. 2 is an upper front perspective view of a bonding machine 2;
Fig. 3 is a front view of the bonding machine 2;
Fig. 4 is a left side view of the bonding machine 2;
Fig. 5 is an upper front perspective view of an inner configuration of the bonding machine 2;
Fig. 6 is an upper rear perspective view of the vicinity of a lower feeding portion 37;
Fig. 7 is a left side view of the vicinity of the lower feeding portion 37;
Fig. 8 is a front view of the vicinity of the lower feeding portion 37;
Fig. 9 is a plan view of the vicinity of the lower feeding portion 37;
Fig. 10 is a sectional view taken along line I-I of Fig. 7;
Fig. 11 is a sectional view taken along line II-II of Fig. 9;
Fig. 12 is a left side view of the vicinity of the lower feeding portion 37 during a bonding operation;
Fig. 13 is an upper front perspective view of a bonding machine 5;
Fig. 14 is an upper front perspective view of an inner configuration of the bonding machine 5;
Fig. 15 is an upper rear perspective view of the vicinity of a lower feeding portion 38;
Fig. 16 is an upper rear perspective view of a fourth roller support portion 280;
Fig. 17 is a left side view of the vicinity of the lower feeding portion 38;
Fig. 18 is a front view of the vicinity of the lower feeding portion 38;
Fig. 19 is a plan view of the vicinity of the lower feeding portion 38;
Fig. 20 is a sectional view taken along line III-III of Fig. 19;
Fig. 21 is a sectional view taken along line III-III of Fig. 19; and
Fig. 22 is a left side view of the vicinity of the lower feeding portion 38 during the bonding operation.

### DETAILED DESCRIPTION OF THE EMBODIMENTS

A cloth bonding apparatus 1 according to the present invention will be described below with reference to the drawings.

### <First embodiment>

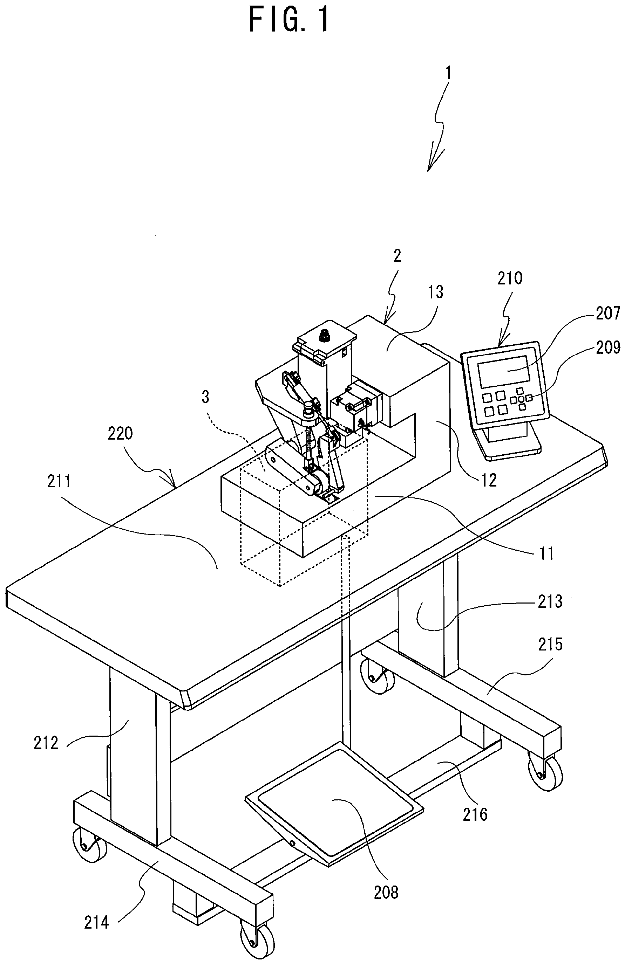

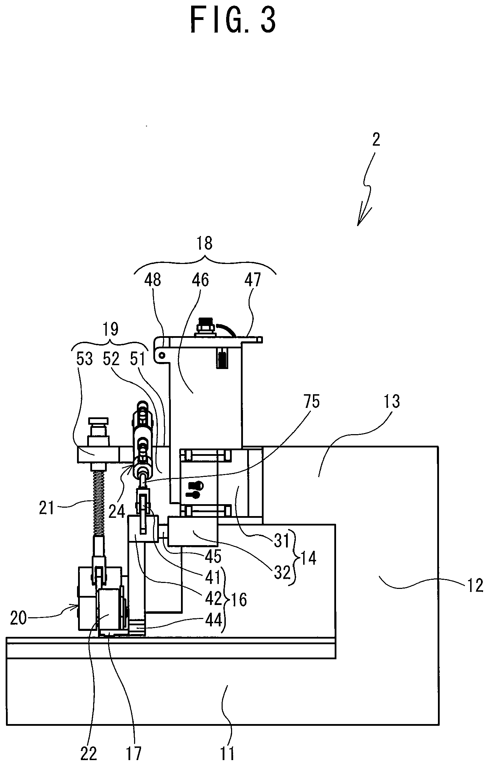

A configuration of the cloth bonding apparatus 1 will be described with reference to Figs. 1 to 4. In the following description, it is defined that the upper side, the lower side, the right side, the left side, the front face side, and the back face side of the bonding machine 2 shown in Fig. 3 are the upper side, the lower side, the right side, the left side, the front side, and the back side of a bonding machine 2, respectively.

An overall configuration of the cloth bonding apparatus 1 will be described with reference to Fig. 1. As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 includes a top board 211, left and right leg portions 212, 213, left and right support portions 214, 215, and a foot holder 216. The bonding machine 2 is fixed on the top board 211. The top board 211 has a rectangular plate shape in a plan view, with the right-and-left direction as its longitudinal direction. The length of the top board 211 in the right-and-left direction is about triple the length of the bonding machine 2 in the right-and-left direction. The length of the top board 211 in the back-and-forth direction is about twice the length of the bonding machine 2 in the back-and-forth direction.

The top board 211 has an operation panel 210 on the right side of a position where the bonding machine 2 is fixed. The operation panel 210 includes a liquid crystal display (LCD) portion 207 and a plurality of keys 209. The LCD portion 207 displays various items of information thereon. The keys 209 are directed for inputting various items of information. A worker may set various operations of the cloth bonding apparatus 1 by operating the keys 209 while looking at the LCD portion 207.

The left leg portion 212 having a plate shape extends vertically downwards from the left end of the top board 211, perpendicular to the upper face of the top board 211. The right leg portion 213 having a plate shape extends vertically downwards from the right end of the top board 211, perpendicular to the upper face of the top board 211. The left support portion 214 is connected to the lower end of the left leg portion 212. The right support portion 215 is connected to the lower end of the right leg portion 213. The left support portion 214 and the right support portion 215 each are substantially prismatic members with the back-and-forth direction as a longitudinal direction.

The foot holder 216 having an elongated plate shape connects the left support portion 214 and the right support portion 215 substantially at the centers thereof in the back-and-forth direction. A pedal 208 is provided substantially at the center of the foot holder 216 in the right-and-left direction. The worker may use the pedal 208 to adjust a feed speed of the cloths. A control box 3 is fixed at the lower face of the top board 211. The control box 3 stores a control substrate having a CPU and the like mounted thereon. The control box 3 is electrically connected to the bonding machine 2, the operation panel 210, and the pedal 208.

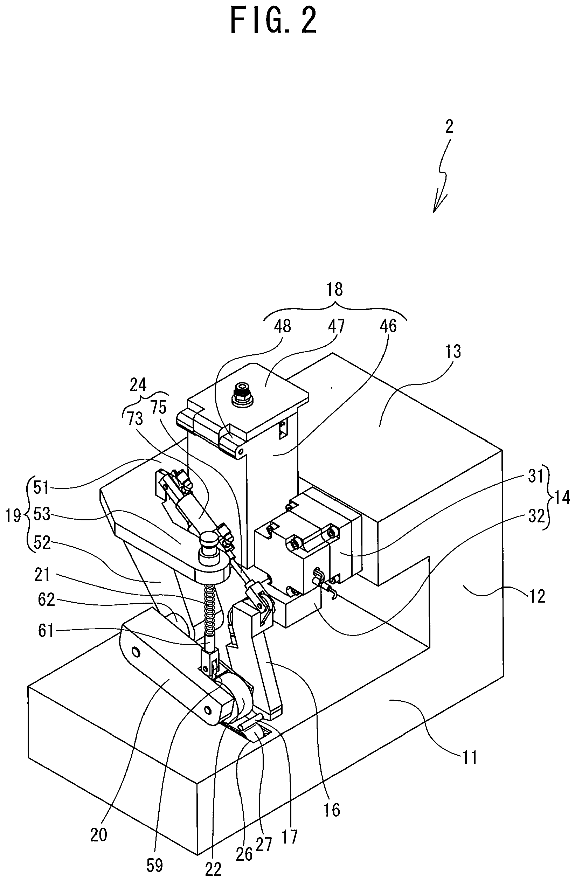

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The bed portion 11 is fixed on the top board 211 (see Fig. 1). The pillar portion 12 extends vertically upwards from the right end of the bed portion 11. The arm portion 13 is connected to the upper end of the pillar portion 12 and extends leftward from the left side of the pillar portion 12. The length of the arm portion 13 in the right-and-left direction is about one third of the length of the bed portion 11 in the right-and-left direction.

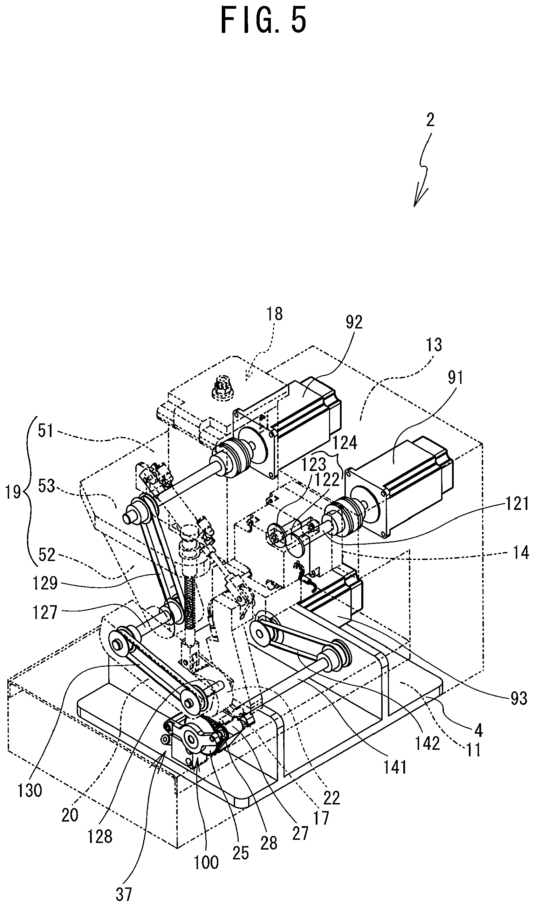

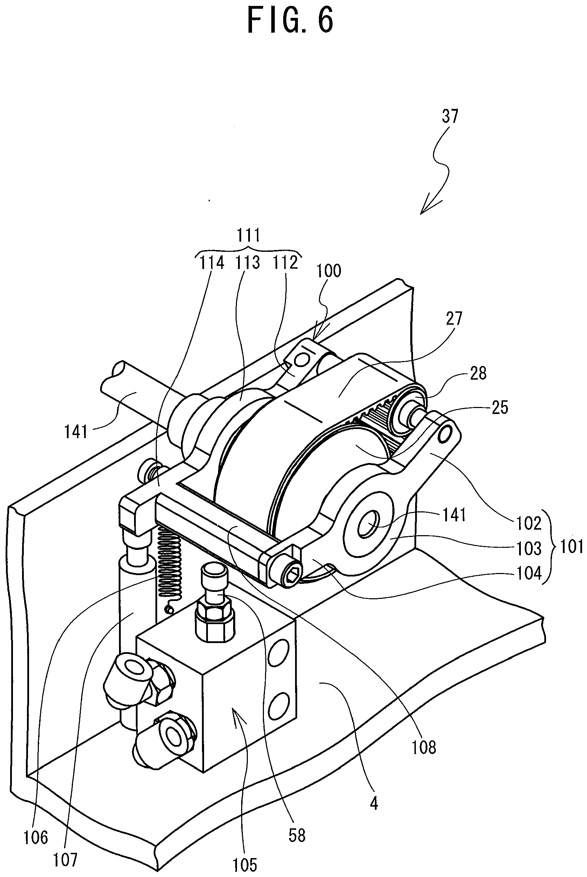

The bed portion 11 includes therein a lower feeding portion 37 (see Fig. 6), a third motor 93 (see Fig. 5) and the like. The bed portion 11 functions as a base that supports the pillar portion 12. The pillar portion 12 supports the arm portion 13.

As shown in Fig. 2, the left end of the arm portion 13 supports a pump casing 14, a storage chamber 18, and a beam portion 19, from front to back in this order. The arm portion 13 includes therein a first motor 91 (see Fig. 5), a second motor 92 (see Fig. 5) and the like. The first motor 91 drives a gear pump 124 (see Fig. 5). The second motor 92 drives the first roller 22.

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein the gear pump 124 (see Fig. 5) and the like. The gear pump 124 supplies an appropriate amount of adhesive to a nozzle 17 with high accuracy. The second pump casing 32 is a substantially rectangular parallelepiped member. The second pump casing 32 extends downward from the left end portion of the lower face of the first pump casing 31. As shown in Fig. 3, the length of the first pump casing 31 in the vertical direction is substantially the same as the length of the arm portion 13 in the vertical direction. The position of the second pump casing 32 in the right-and-left direction is substantially the same as the center position of the bed portion 11 in the right-and-left direction.

The second pump casing 32 includes a shaft portion 45 (see Fig. 3) on its left side. The shaft portion 45 is connected to the right side of an upper end portion 42 of a support portion 16 and swingably supports the support portion 16 about the shaft portion 45. The pump casing 14 includes a channel. The channel leads an adhesive from the storage chamber 18 to the gear pump 124.

As shown in Figs. 2 and 3, the shape of the support portion 16 is substantially rectangular parallelepiped with the vertical direction as the longitudinal direction. A small gap is present between the lower end portion 44 of the support portion 16 and the bed portion 11. The support portion 16 includes therein a channel. The channel leads the adhesive from the pump casing 14 to the nozzle 17. The support portion 16 includes the nozzle 17 at the lower end portion 44. The nozzle 17 extends leftward from the support portion 16. The support portion 16 includes a drive transmitting portion 41 at the upper end portion 42. The drive transmitting portion 41 supports an end portion of a movable portion 75 of an air cylinder 24.

The air cylinder 24 includes air inlet ports. An intake/exhaust hose (not shown) is connected to the air inlet ports. The cloth bonding apparatus 1 controls an intake and an exhaust of a compressed air through the air inlet ports. The position of a piston inside a body portion 73 of the air cylinder 24 moves in accordance with the intake and exhaust control. The movable portion 75 is connected to the piston. Thus, the end portion of the movable portion 75 moves back and forth along with the movement of the piston.

The support portion 16 swings back and forth about the shaft portion 45 along with the back-and-forth movement of the movable portion 75 of the air cylinder 24. The nozzle 17 moves along with the swing of the support portion 16 to a position where the cloth bonding work is performed and to a position where maintenance is performed.

The nozzle 17 has a cylindrical shape. The nozzle 17 has a discharge port from which the adhesive is discharged at the bottom. When the worker performs the cloth bonding work, the discharge port opposes the bed portion 11. When performing the bonding work, the worker inserts the nozzle 17 between the two layers of oppositely arranged cloths. The gear pump 124 supplies the adhesive to the nozzle 17 through the channel provided inside the support portion 16. The nozzle 17 discharges the adhesive from the discharge port onto the cloth. The adhesive may be applied on the surface of the lower cloth positioned below the nozzle 17.

As shown in Figs. 2 and 3, the storage chamber 18 has a substantially rectangular parallelepiped shape with the vertical direction as the longitudinal direction. The storage chamber 18 extends upward from the left side of the arm portion 13 and from the back of the pump casing 14. The storage chamber 18 includes a body portion 46, a cover portion 47, and a cover shaft portion 48. The shape of the body portion 46 has a bottomed tube shape having an opening at the top. The cover portion 47 covers the opening at the top of the body portion 46. The body portion 46 has the cover shaft portion 48 at its upper end. The cover shaft portion 48 supports the cover portion 47 in an openable/closable manner. The storage chamber 18 stores a hot-melt adhesive (not shown) inside the body portion 46. The stored adhesive may be supplied from the storage chamber 18 to the gear pump 124 and to a nozzle 17 as needed. The hot-melt adhesive melts when heated to a predetermined temperature, and solidifies at a temperature below the predetermined temperature.

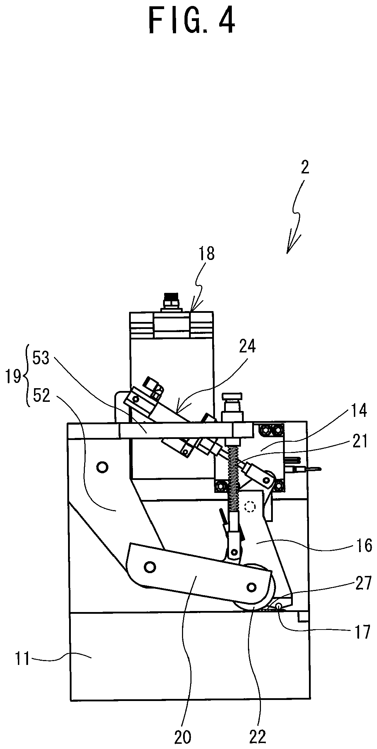

As shown in Fig. 2, the beam portion 19 includes a body portion 51, a spring support portion 53, and a column portion 52. The body portion 51 is a member extending horizontally leftward from the rear left end of the arm portion 13. The length of the body portion 51 in the right-and-left direction is about one third of the length of the bed portion 11 in the right-and-left direction. The spring support portion 53 has a plate shape and extends horizontally forward from the left end portion of the body portion 51. The length of the spring support portion 53 in the back-and-forth direction is about half the length of the bed portion 11 in the back-and-forth direction. As shown in Figs. 2 and 4, the column portion 52 extends obliquely downward from the body portion 51 at about 45 degrees relative to the horizontal plane. There is a gap between the lower end of the column portion 52 and the bed portion 11.

As shown in Fig. 2, the spring support portion 53 has a hole at the front end portion. The spring support portion 53 supports a shaft portion 61 in a vertically movable manner. The shaft portion 61 is inserted through a spring 21. The upper end part of the shaft portion 61 is inserted into the hole of the spring support portion 53. The column portion 52 has a shaft portion 62 extending horizontally leftward from the lower end part thereof. The shaft portion 62 supports a rear end portion of a roller holding portion 20. The roller holding portion 20 may swing a front end portion in the vertical direction with the shaft portion 62 as the center of swing. The body portion 51 is provided with the air cylinder 24 at the right side of the spring support portion 53.The air cylinder 24 is directed for switching the position of the support portion 16.

The roller holding portion 20 will be described. The front end portion of the roller holding portion 20 rotatably supports the first roller 22 having a cylindrical shape. The first roller 22 is positioned in the vicinity of the back of the nozzle 17 that extends from the support portion 16. The roller holding portion 20 includes a shaft support portion 59 on the upper face at a slightly forward position from the center. The shaft support portion 59 supports the lower end of the shaft portion 61 inserted through the spring 21. The spring 21 is interposed between the spring support portion 53 and the lower end of the shaft portion 61. The spring 21 urges the shaft portion 61 downwards, thereby urging the roller holding portion 20 connected to the shaft portion 61 downwards. As shown in Fig. 2, the bed portion 11 is provided with a hole 26 below the first roller 22 and below the nozzle 17. A part of a belt 27 inside the bed portion 11 slightly projects upward from the hole 26. The belt 27 moves from the front of the bonding machine 2 to the back thereof. The belt 27 feeds the cloths sandwiched between the belt 27 and the nozzle 17 from front to back.

The inner configuration of the bonding machine 2 will be described below with reference to Fig. 5. The bonding machine 2 includes therein the first motor 91, the second motor 92, the third motor 93, and the like.

The first motor 91 transmits a rotation drive force to the gear pump 124 via a rotary shaft 121 thereby driving the gear pump 124. The gear pump 124 includes a drive gear 122 and a driven gear 123. The drive gear 122 is fixed at the left end of the rotary shaft 121. The drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the first roller 22 via the rotary shafts 126, 127, 128 and belts 129, 130 thereby driving the first roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley. The right end of the rotary shaft 127 is positioned inside the lower end of the column portion 52 and the left end of the rotary shaft 127 is positioned inside the rear end portion of the roller holding portion 20. The right end and left end of the rotary shaft 127 each support a pulley. The rotary shaft 128 is a rotary shaft of the first roller 22. The left end of the rotary shaft 128 is positioned inside the front end portion of the roller holding portion 20 and supports a pulley. The right end of the rotary shaft 128 projects from the front end portion and supports the first roller 22. The belt 129 is crossed between the pulley at the left end of the rotary shaft 126 and the pulley at the right end of the rotary shaft 127 inside the column portion 52. The belt 130 is crossed between the pulley at the left end of the rotary shaft 127 and the pulley at the left end of the rotary shaft 128 inside the roller holding portion 20. The first roller 22 rotates along with the rotation of the second motor 92.

The third motor 93 transmits a rotation drive force to a first pulley 25 via a rotary shaft 141 and a belt 142 thereby rotating the first pulley 25. The rotary shaft 141 is a rotary shaft of the first pulley 25. The right end portion of the rotary shaft 141 extends rightward inside the bed portion 11 and supports the pulley. The bed portion 11 has a support bed 4 therein. The support bed 4 rotatably supports the rotary shaft 141. The belt 142 is crossed between a pulley of a rotary shaft of the third motor 93 and a pulley at the right side of the rotary shaft 141, inside the bed portion 11. The first pulley 25 rotates along with the rotation of the third motor 93.

The lower feeding portion 37 will be described with reference to Figs. 6 to 11. The upper right, the lower left, the upper left, and the lower right of Fig. 6 correspond to the front side, the back side, the right side, and the left side of the lower feeding portion 37, respectively.

The lower feeding portion 37 includes the first pulley 25, a second pulley 28, a pulley support portion 100, the belt 27 and a spring 106 (see Fig. 6). The pulley support portion 100 rotatably supports the second pulley 28. The belt 27 is a meshed circular belt. The shape of the first pulley 25 and the second pulley 28 is a cylindrical shape. The diameter of the first pulley 25 is about four times as large as the diameter of the second pulley 28. The first pulley 25 is provided below the first roller 22 (see Fig. 5). The second pulley 28 is provided diagonally in front of and below the nozzle 17 (see Fig. 5).

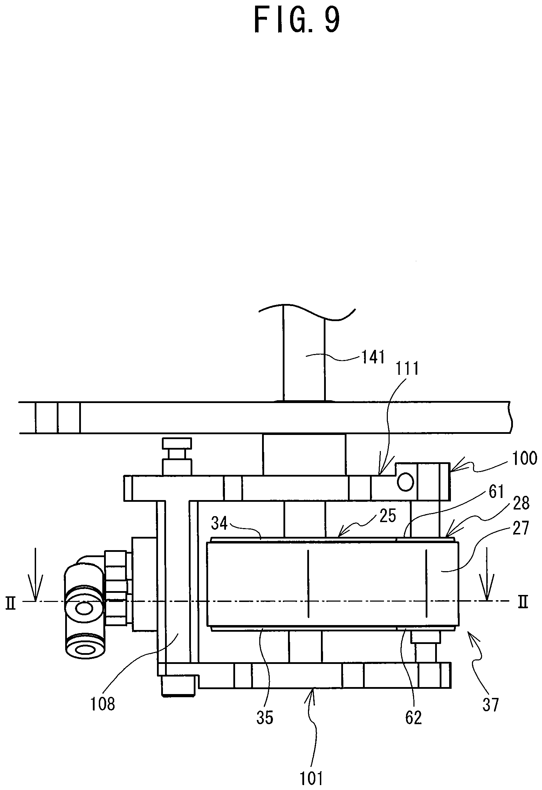

As shown in Figs. 6 and 9, the pulley support portion 100 includes a left side plate portion 101, a right side plate portion 111, and an bridging portion 108. The left side plate portion 101 having a plate shape is positioned at the left side of the first pulley 25 and the second pulley 28. The right side plate portion 111 having a plate shape is positioned at the right side of the first pulley 25 and the second pulley 28. The bridging portion 108 connects the left side plate portion 101 and the right side plate portion 111.

As shown in Fig. 6, the left side plate portion 101 includes a first arm portion 102, a ring portion 103, and a second arm portion 104. The ring portion 103 having a circular plate shape is positioned in parallel with the left end surface of the first pulley 25. The center of the ring portion 103 is at the same position as the center of a rotary shaft of the first pulley 25. The diameter of the ring portion 103 is substantially half the diameter of the first pulley 25. The ring portion 103 includes a hole at its center. The rotary shaft 141 of the first pulley 25 is inserted into the hole. The second arm portion 104 extends horizontally backward from the ring portion 103. The first arm portion 102 extends diagonally in front of the ring portion 103 at about 45 degrees.

The right side plate portion 111 opposes the left side plate portion 101 across the first pulley 25 and the second pulley 28. The right side plate portion 111 has substantially the same shape as the left side plate portion 101. The right side plate portion 111 includes a first arm portion 112, a ring portion 113, and a second arm portion 114. The length of the second arm portion 114 in the back-and-forth direction is slightly longer than the length of the second arm portion 104 in the back-and-forth direction. The ring portion 113 includes a hole at its center. The rotary shaft 141 of the first pulley 25 is inserted into the hole.

The first arm portion 102 and the first arm portion 112 have a hole at their end portion, respectively. The rotary shaft of the second pulley 28 is inserted into these holes. The first arm portion 102 and the first arm portion 112 rotatably support the second pulley 28. A distance between the first pulley 25 and the second pulley 28 is always constant. The bridging portion 108 extends rightward from the end portion of the second arm portion 104 and is connected to the second arm portion 114.

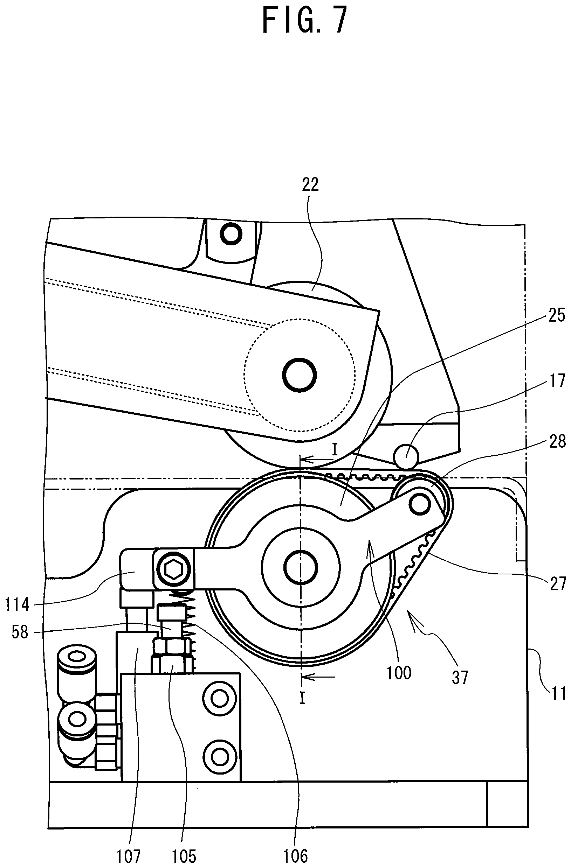

As shown in Figs. 6 and 7, the belt 27 is crossed between the first pulley 25 and the second pulley 28. The belt 27 rotates along with the rotation of the first pulley 25.

An air cylinder 105 is provided below the bridging portion 108. A movable portion 58 of the air cylinder 105 moves in the vertical direction. The movable portion 58 can abut against the bridging portion 108. Fig. 6 shows a state in which the movable portion 58 has moved downward. The air cylinder 105 includes an air inlet port. An intake/exhaust hose (not shown) is connected to the air inlet port. The cloth bonding apparatus 1 controls an intake and an exhaust of a compressed air through the air inlet port. The position of a piston inside the air cylinder 105 moves in accordance with the intake and exhaust control. The movable portion 58 is connected to the piston. Thus, the movable portion 58 vertically moves along with the movement of the piston.

A stopper 107 is provided below the second arm portion 114. The stopper 107 has a bar shape with the vertical direction as the longitudinal direction. The stopper 107 extends vertically upwards from the support bed 4. The stopper 107 can change the length in the vertical direction. The stopper 107 can abut against the rear end portion of the second arm portion 114.

As shown in Fig. 6, a spring 106 is provided in front of the stopper 107. The lower end portion of the spring 106 is connected to the support bed 4. The upper end portion of the spring 106 is connected to the right side of the second arm portion 114 and to substantially the center portion of the second arm portion 114 in the back-and-forth direction. The spring 106 pulls the second arm portion 114 downward. The pulley support portion 100 swings about the rotary shaft 141. The first arm portion 102 and the first arm portion 112 are raised due to the urging force of the spring 106. Consequently, the second pulley 28 moves upward.

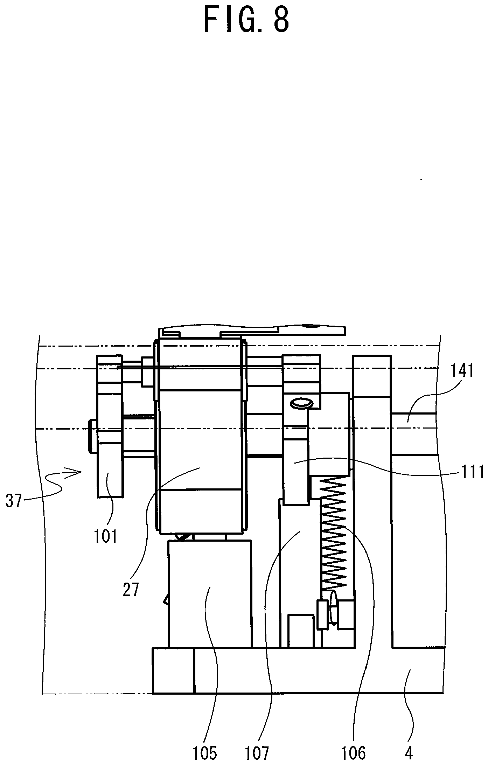

As shown in Figs. 7 and 8, a part of the belt 27 slightly projects upward from the hole 26 (see Fig. 2) of the bed portion 11. The belt 27 is crossed between the first pulley 25 and the first roller 22. The movable portion 58 moves in the vertical direction and adjusts a swingable range of the pulley support portion 100. By changing the length of the stopper 107 in the vertical direction, the swingable range of the pulley support portion 100 can be adjusted. Thus, the movable portion 58 and the stopper 107 can adjust an amount of upward movement of the belt 27.

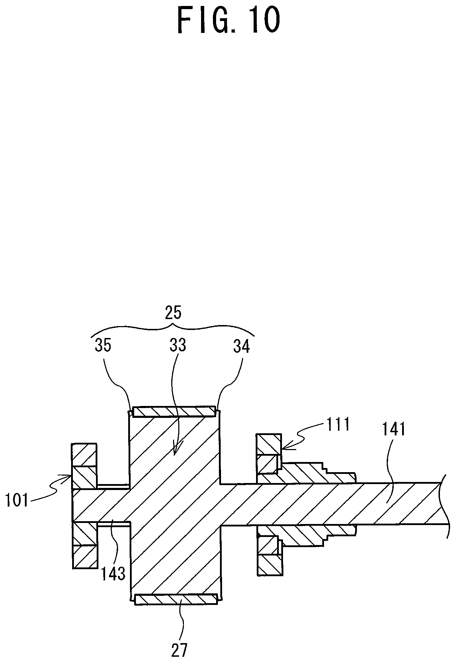

The first pulley 25 and the second pulley 28 will be described. As shown in Fig. 10, the first pulley 25 includes flanges 34 and 35. The flange 34 extends radially outward from the right end portion of a peripheral wall surface of a cylindrical portion 33 of the first pulley 25. The flange 35 extends radially outward from the left end portion of the peripheral wall surface of the cylindrical portion 33 of the first pulley 25. The belt 27 contacts the cylindrical portion 33 of the first pulley 25. The flanges 34 and 35 sandwich the belt 27 from left to right sides. Therefore, the belt 27 does not come off the first pulley 25 even when the first pulley 25 is driven to rotate.

The height length in the radial direction of the flanges 34 and 35 is lower than the thickness of the belt 27 crossed on the first pulley 25. Accordingly, the belt 27 projects outward in the radial direction from the end portions of the flanges 34 and 35. Thus, when the belt 27 feeds the cloths, the belt 27 contacts the cloths, but the flanges 34 and 35 do not contact the cloths. Consequently, the belt 27 can reliably feed the cloths by a frictional force on the cloths.

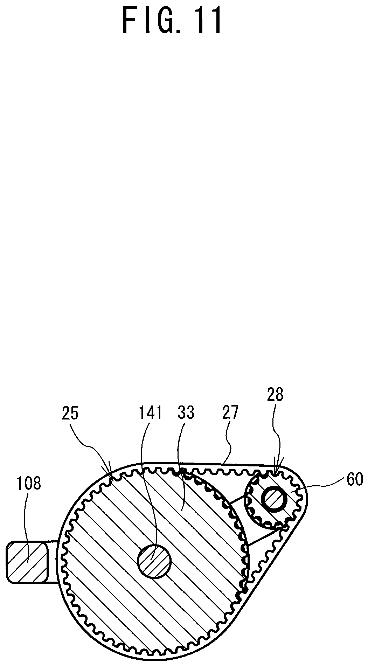

As shown in Fig. 9, the second pulley 28 includes flanges 61 and 62. The flange 61 extends radially outward from the right end portion of a peripheral wall surface of a cylindrical portion 60 (see Fig. 11) of the second pulley 28. The flange 62 extends radially outward from the left end portion of the peripheral wall surface of the cylindrical portion 60 of the second pulley 28. The belt 27 contacts the cylindrical portion 60 of the second pulley 28 and is sandwiched between the flange 61 and the flange 62. Therefore, the belt 27 does not come off the second pulley 28 even when the second pulley 28 is driven to rotate.

The height length in the radial direction of the flanges 61 and 62 is lower than the thickness of the belt 27 crossed on the second pulley 28. Accordingly, the belt 27 projects outward in the radial direction from the end portions of the flanges 61 and 62. Therefore, when the belt 27 feeds the cloths, the belt 27 contacts the cloths, but the flanges 61 and 62 do not. Consequently, the belt 27 can reliably feed the cloths by a frictional force on the cloths.

As shown in Fig. 11, the first pulley 25 includes meshes on the peripheral wall surface of the cylindrical portion 33. The second pulley 28 includes meshes on the peripheral wall surface of the cylindrical portion 60. The meshes on the internal side surface of the belt 27 are meshed with the meshes of the first pulley 25 and the second pulley 28.

The first pulley 25 rotates along with the rotation of the rotary shaft 141. The belt 27 rotates along with the rotation of the first pulley 25. The meshes of the belt 27 are meshed with the meshes of the first pulley 25 so that the belt 27 does not slip against the first pulley 25. Thus, the first pulley 25 can feed the cloths at a desired movement speed.

In the present embodiment, the belt 27 is a meshed belt. The meshes of the first pulley 25 and the second pulley 28 are meshed with the meshes of the belt 27. However, the present invention is not limited to this configuration. The belt 27, the first pulley 25 and the second pulley 28 may not include the meshes.

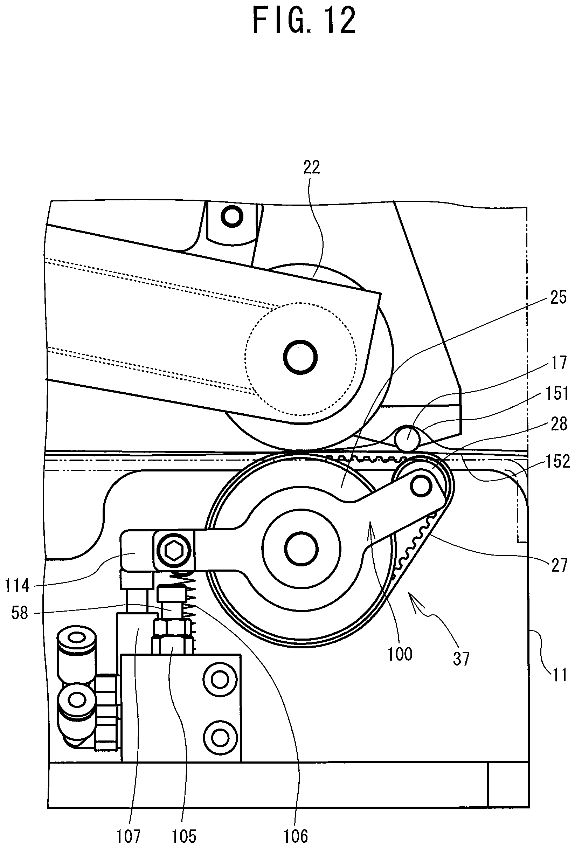

The way an upper cloth 151 and a lower cloth 152 are bonded with each other during the bonding operation will be described with reference to Fig. 12. First, the worker places the lower cloth 152 between the nozzle 17 and the belt 27 that slightly projects upward from the hole 26 (see Fig. 2). The worker then places the upper cloth 151 on the lower cloth 152.

The worker steps on and presses down the pedal 208 (see Fig. 1). The gear pump 124 rotates. The adhesive flows through the channel and is discharged from the discharge port of the nozzle 17. The adhesive adheres onto the lower cloth 152. The first pulley 25 rotates. The belt 27 crossed between the first pulley 25 and the second pulley 28 rotates. Therefore, the lower cloth 152 on the belt 27 is moved from front to back.

The upper cloth 151 and the lower cloth 152 reach the position below the rotating first roller 22. The first roller 22 and the belt 27 sandwich and press the upper cloth 151 and the lower cloth 152 in the vertical direction. The upper cloth 151 and the lower cloth 152 are bonded with each other by the adhesive. The first roller 22 and the belt 27 each rotate. Consequently, the upper cloth 151 and the lower cloth 152 are fed from front to back.

The spring 106 urges the second arm portion 114 downward. Therefore, the second pulley 28 moves upward. The belt 27 crossed on the second pulley 28 presses the lower cloth 152 to the nozzle 17. The position of the second pulley 28 in the vertical direction changes in accordance with the thickness of the lower cloth 152. When the thickness of the cloth is large, the amount of downward movement of the second pulley 28 is large. When the thickness of the cloth is small, the amount of downward movement of the second pulley 28 is small. Therefore, the second pulley 28 presses the lower cloth 152 to the nozzle 17 with a constant force.

As the second pulley 28 moves upward, the bridging portion 108 (refer to Fig.6) and the second arm portion 114 move downward. The second arm portion 114 contacts the stopper 107. The stopper 107 supports the second arm portion 114 from below. Therefore, the second pulley 28 does not move upward beyond a predetermined limit.

The amount of adhesive discharged from the nozzle 17 changes in accordance with the positional relationship between the nozzle 17 and the lower cloth 152. When a gap between the nozzle 17 and the lower cloth 152 is large, the adhesive is discharged from the nozzle 17 in more than an appropriate amount. When the lower cloth 152 is strongly pressed to the nozzle 17, the adhesive is not discharged from the nozzle 17. In the cloth bonding apparatus 1, the second pulley 28 presses the lower cloth 152 to the nozzle 17 with an optimum amount of force. As a result, the cloth bonding apparatus 1 can discharge an appropriate amount of adhesive to the lower cloth 152.

The worker may use the air cylinder 105 and the stopper 107 as follows. The worker adjusts the position of the end portion of the stopper 107 in the vertical direction beforehand, in accordance with the thickness of the cloths to be bonded. The worker starts the bonding operation. When bonding thick cloths, the cloth bonding apparatus 1 may control the air cylinder 105 to adjust the position of the movable portion 58, and moves the belt 27 downward. Thus, the cloth bonding apparatus 1 can press the lower cloth 152 to the nozzle 17 with a constant force.

As described above, in the first embodiment, the belt 27 is provided between below the nozzle 17 and below the first roller 22. The belt 27 can feed the cloths backward from around the nozzle 17 and lead the cloths to the first roller 22. Therefore, the cloth bonding apparatus 1 can feed the cloths in a state in which the end portion arranged at the most downstream side in the cloth feeding direction is positioned below the nozzle 17. The cloth bonding apparatus 1 can discharge an adhesive to the end portion arranged at the most downstream side in the cloth feeding direction and bond the cloths. The belt 27 can continuously feed the cloths from around the nozzle 17 to around the first roller 22.

The spring 106 urges the second pulley 28 upward. Thus, the cloth bonding apparatus 1 can urge the belt 27 toward the nozzle 17 with a constant force with a simple configuration. The spring 106 can press the lower cloth 152 to the nozzle 17 with a constant force even when the thickness of the lower cloth 152 has changed. Consequently, the worker does not need to adjust the position of the nozzle 17.

The center of swing of the pulley support portion 100 is the same as the center of rotation of the first pulley 25. Thus, the distance between the first pulley 25 and the second pulley 28 is always constant. Thus, the first pulley 25 does not contact the second pulley 28 even when the second pulley 28 swings. The rotary shaft of the first pulley 25 can be shared with the swing shaft of the pulley support portion 100. Therefore, the cloth bonding apparatus 1 can be simplified in its configuration and the cloth bonding apparatus 1 can thus be made smaller.

The second motor 92 that drives the first roller 22 of Fig. 5 corresponds to the "drive portion" of the present invention. The pulley support portion 100 of Fig. 6 corresponds to the "arm mechanism" of the present invention, the spring 106 corresponds to the "spring" of the present invention, and the pulley support portion 100 and the spring 106 correspond to the "biasing mechanism" of the present invention. The air cylinder 105 and the stopper 107 of Fig. 6 correspond to the "stopper" of the present invention.

The present invention is not limited to the above-described first embodiment and can be variously modified. In the first embodiment described above, the second pulley 28 is provided diagonally in front of and below the nozzle 17. The present invention is not limited to this configuration. The second pulley 28 may be provided at least at the upstream side of the cloth feeding direction relative to the nozzle 17. The second pulley 28 may be provided directly below the nozzle 17. The second pulley 28 may be provided at the upstream side of the cloth feeding direction as compared with the first embodiment. In the first embodiment described above, Both the first pulley 25 and the second pulley 28 include flanges. The present invention is not limited to this configuration. At least one of the first pulley 25 and the second pulley may include the flanges.

### <Second embodiment>

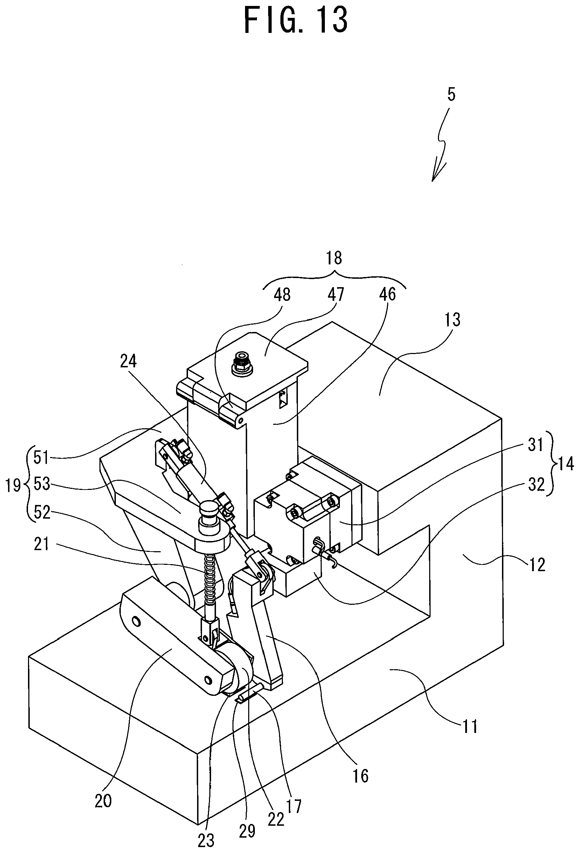

A second embodiment will be described. A configuration of a bonding machine 5 will be described with reference to Fig. 13. As shown in Fig. 13, the bed portion 11 is provided with a hole 23 below the first roller 22. A part of a second roller 232 (see Fig, 15) inside the bed portion 11 slightly projects upward from the hole 23. The second roller 232 rotates with the first roller 22. The first roller 22 and the second roller 232 feed the cloths sandwiched between the rollers 22 and 232 from front to back.

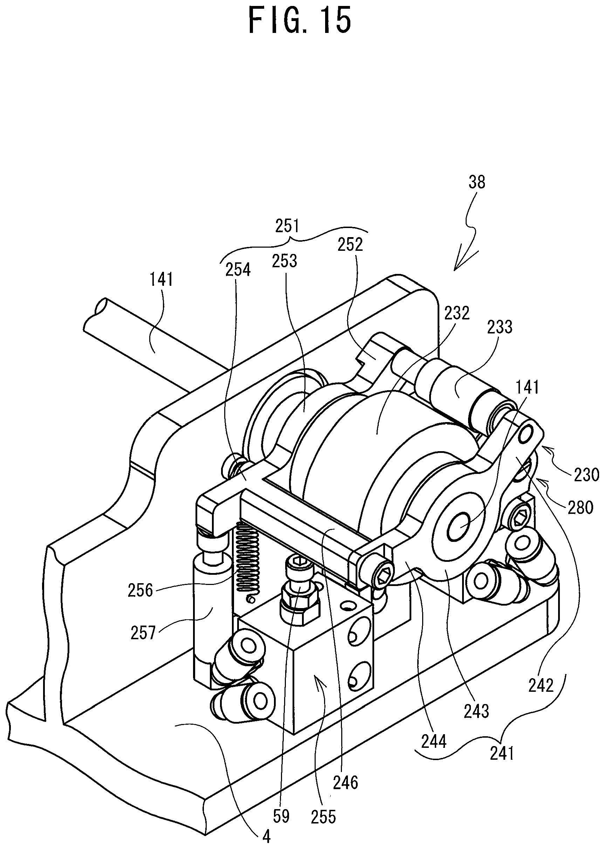

The bed portion 11 is provided with a hole 29 below the nozzle 17. A part of a third roller 233 (see Fig. 15) inside the bed portion 11 slightly projects upward from the hole 29. The third roller 233 rotates to feed the cloths sandwiched between the nozzle 17 and the third roller 233 from front to back. The third roller 233 urges the cloth upward.

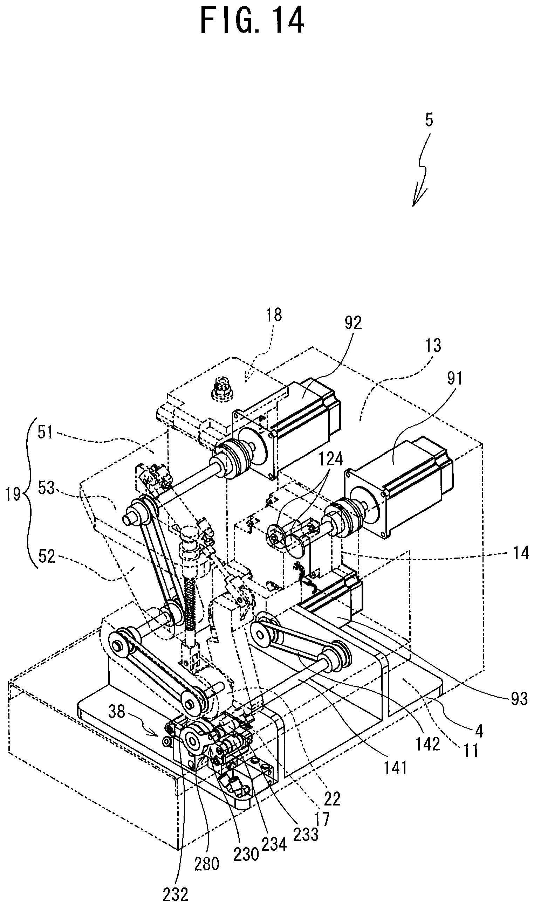

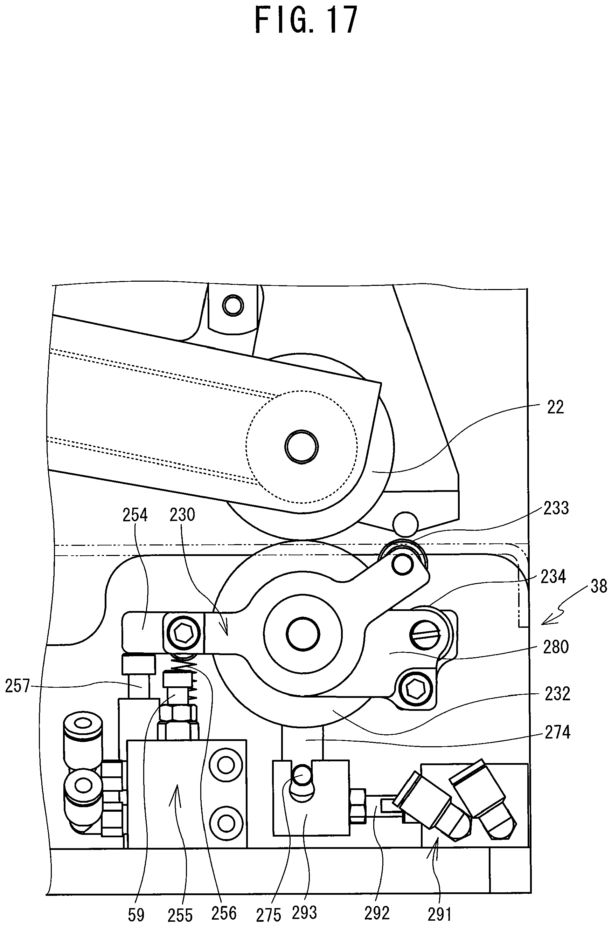

The internal configuration of the bonding machine 5 will be described with reference to Figs. 14 to 19. The bonding machine 5 includes a lower feeding portion 38. The front face side, the back face side, the right side and the left side of Fig. 17 correspond to the left side, the right side, the front side and the back side of the lower feeding portion 38, respectively.

As shown in Figs. 14 and 15, the lower feeding portion 38 includes the second roller 232, the third roller 233, a fourth roller 234, a third roller support portion 230, a fourth roller support portion 280 and a spring 256. The third roller support portion 230 supports the third roller 233. The fourth roller support portion 280 supports the fourth roller 234. The shape of the second roller 232, the third roller 233 and the fourth roller 234 is cylindrical. The diameter of the second roller 232 is about four times as large as the diameter of the third roller 233. The diameter of the fourth roller 234 is substantially the same as the diameter of the third roller 233. The second roller 232 is provided below the first roller 22. The third roller 233 is provided below the nozzle 17. The fourth roller 234 is provided below the third roller 233.

As shown in Fig. 15, the fourth roller support portion 280 sandwiches the second roller 232 from left to right. The third roller support portion 230 sandwiches the fourth roller support portion 280 from left to right. The spring 256 is connected to the third roller support portion 230. A stopper 257, an air cylinder 255 and an air cylinder 291 (see Fig. 17) are provided below the lower feeding portion 38.

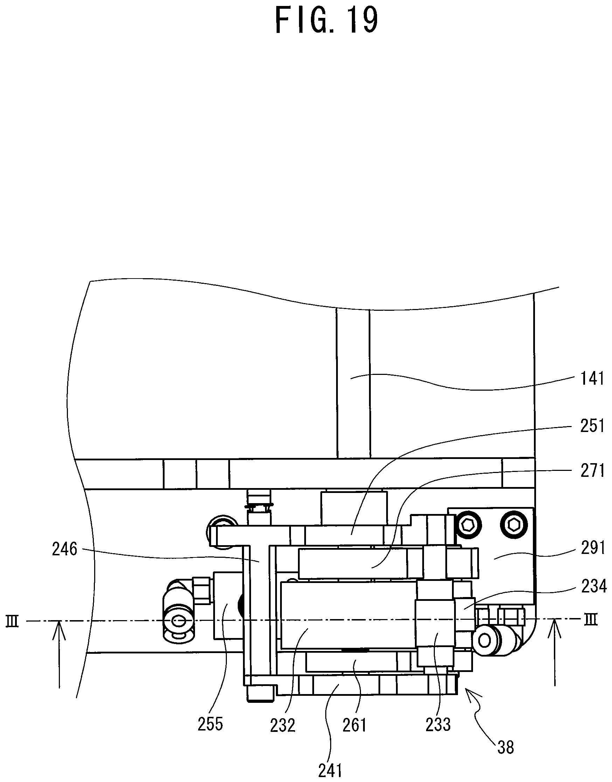

The third roller support portion 230 will be described. As shown in Figs. 15 and 19, the third roller support portion 230 includes a left side plate portion 241, a right side plate portion 251 and an bridging portion 246. The left side plate portion 241 having a plate shape is positioned at the left side of the second roller 232 and the third roller 233. The right side plate portion 251 having a plate shape is positioned at the right side of the second roller 232 and the third roller 233. The bridging portion 246 connects the left side plate portion 241 and the right side plate portion 251.

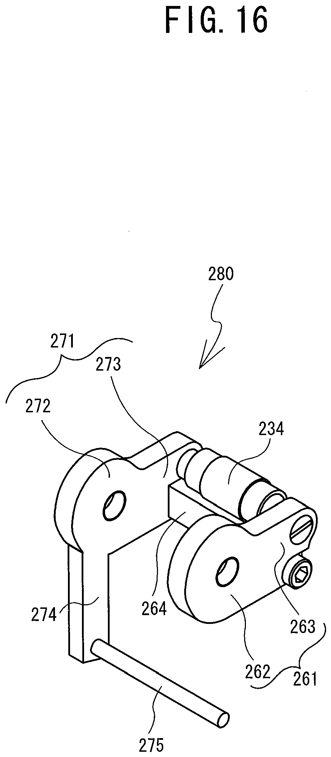

As shown in Fig. 15, the left side plate portion 241 includes a first arm portion 242, a ring portion 243 and a second arm portion 244. The ring portion 243 having a circular plate shape is positioned in parallel with the left side of a ring portion 262 (see Fig. 16, described later) of the fourth roller support portion 280. The center of the ring portion 243 is at the same position as the center of the rotary shaft of the second roller 232. The diameter of the ring portion 243 is substantially half the diameter of the second roller 232. The ring portion 243 includes a hole at its center. The rotary shaft 141 of the second roller 232 is inserted into the hole. The second arm portion 244 extends horizontally behind the ring portion 243. The first arm portion 242 extends diagonally in front of the ring portion 243 at about 45 degrees.

The right side plate portion 251 has substantially the same shape as the left side plate portion 241. The right side plate portion 251 includes a first arm portion 252, a ring portion 253 and a second arm portion 254. The ring portion 253 is positioned in parallel with the right side of the ring portion 272 (see Fig. 16, described later) of the fourth roller support portion 280. The length of the second arm portion 254 in the back-and-forth direction is slightly longer than the length of the second arm portion 244 in the back-and-forth direction. The ring portion 253 includes a hole at its center. The rotary shaft 141 of the second roller 232 is inserted into the hole. The second arm portion 254 extends horizontally backward from the ring portion 253. The first arm portion 252 extends diagonally in front of the ring portion 253 at about 45 degrees.

The first arm portion 242 and the first arm portion 252 have a hole at their end portion, respectively. The rotary shaft of the third roller 233 is inserted into these holes. The first arm portion 242 and the first arm portion 252 rotatably support the third roller 233. A distance between the third roller 233 and the second roller 232 is always constant. The bridging portion 246 extends rightward from the end portion of the second arm portion 244 and is connected to the second arm portion 254.

The air cylinder 255 is provided below the bridging portion 246. A movable portion 59 of the air cylinder 255 moves in the vertical direction. The movable portion 59 can abut against the bridging portion 246. The air cylinder 255 includes an air inlet port. An intake/exhaust hose (not shown) is connected to the air inlet port. The cloth bonding apparatus 1 controls an intake and an exhaust of a compressed air through the air inlet port. The position of a piston inside the air cylinder 255 moves in accordance with the intake and exhaust control. The movable portion 59 is connected to the piston. Therefore, the movable portion 59 vertically moves along with the movement of the piston.

The stopper 257 is provided below the second arm portion 254. The stopper 257 has a bar shape with the vertical direction as the longitudinal direction. The stopper 257 extends vertically upward from the support bed 4. The stopper 257 can change the length in the vertical direction. The stopper 257 can abut the rear end portion of the second arm portion 254. The spring 256 is provided in front of the stopper 257. The lower end portion of the spring 256 is connected to the support bed 4. The upper end portion of the spring 256 is connected to the right side of the second arm portion 254 and to substantially the center portion of the second arm portion 254 in the back-and-forth direction. The spring 256 pulls the second arm portion 254 downward. The third roller support portion 230 swings about the rotary shaft 141. The first arm portion 242 and the first arm portion 252 rise based on the biasing of the spring 256. The third roller 233 is raised as the third roller support portion 230 swings. As a result, the third roller 233 moves upward.

The movable portion 59 moves in the vertical direction and adjusts a swingable range of the third roller support portion 230. By changing the length of the stopper 257 in the vertical direction, a swingable range of the third roller support portion 230 can be adjusted. Thus, the movable portion 59 and the stopper 257 can adjust an amount of upward movement of the third roller 233.

As shown in Fig. 14, the third motor 93 transmits a rotation drive force to the second roller 232 via the rotary shaft 141 and the belt 142 to rotate the second roller 232. The right end portion of the rotary shaft 141 extends rightward inside the bed portion 11 and supports the pulley. The support bed 4 rotatably supports the rotary shaft 141. The belt 142 is crossed between the pulley of the rotary shaft of the third motor 93 and the pulley at the right side of the rotary shaft 141, inside the bed portion 11. The second roller 232 rotates along with the rotation of the third motor 93.

The fourth roller support portion 280 will be described. As shown in Figs. 16, the fourth roller support portion 280 includes a left side plate portion 261, a right side plate portion 271, a movement arm portion 274 and an bridging portion 264. The left side plate portion 261 having a plate shape is positioned at the left side of the second roller 232 (see Fig. 15) and the fourth roller 234. The right side plate portion 271 having a plate portion is positioned at the right side of the second roller 232 and the fourth roller 234.

As shown in Fig. 16, the left side plate portion 261 includes a ring portion 262 and a support arm portion 263. The ring portion 262 having a circular plate shape is positioned in parallel with the left side of the second roller 232 (see Fig. 15). The center of the ring portion 262 is at the same position as the center of the rotary shaft of the second roller 232. The diameter of the ring portion 262 is substantially the same as the diameter of the ring portion 243 (see Fig. 15). The ring portion 262 includes a hole at its center. The rotary shaft 141 (see Fig. 15) of the second roller 232 is inserted into the hole. The support arm portion 263 extends horizontally forward from the ring portion 262.

The right side plate portion 271 has substantially the same shape as the left side plate portion 261. The right side plate portion 271 includes a ring portion 272 and a support arm portion 273. The ring portion 272 is positioned in parallel with the right side of the second roller 232. The ring potion 272 includes a hole at its center. The rotary shaft 141 (see Fig. 15) of the second roller 232 is inserted into the hole.

The support arm portion 263 and the support arm portion 273 have a hole at top of their end portion, respectively. The rotary shaft of the fourth roller 234 is inserted into these holes. The fourth roller 234 is in contact with the second roller 232 (see Fig. 15). Thus, the fourth roller 234 rotates along with the rotation of the second roller 232. The bridging portion 264 extends rightward from the end portion of the support arm portion 263 and is connected to the end portion of the support arm portion 273.

The movement arm portion 274 extends downward from the ring portion 272. A bar portion 275 extends leftward from the lower end portion of the movement arm portion 274.

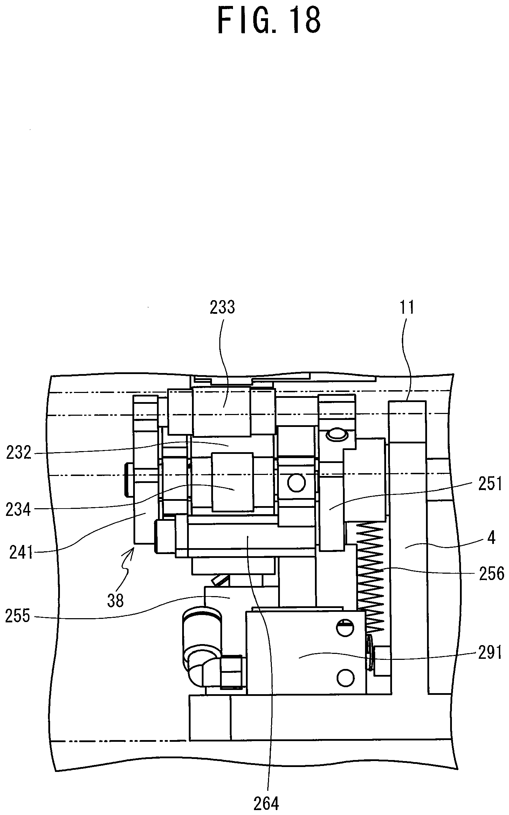

As shown in Figs. 17 and 18, an air cylinder 291 is provided diagonally in front of and below the lower feeding portion 38. A movable portion 292 of the air cylinder 291 moves in the back-and-forth direction. The air cylinder 291 includes an air inlet port. An intake/exhaust hose (not shown) is connected to the air inlet port. The cloth bonding apparatus 1 controls an intake and an exhaust of a compressed air through the air inlet port. The position of a piston inside the air cylinder 291 moves in accordance with the intake and exhaust control. The movable portion 292 is connected to the piston. Thus, the movable portion 292 moves in the back-and-forth direction along with the movement of the piston.

An engaging portion 293 is connected to the end portion of the movable portion 292. The engaging portion 293 is substantially rectangular parallelepiped. The engaging portion 293 includes a groove extending in the right-and-left direction at its upper surface. The bar portion 275 is positioned within the groove. The engaging portion 293 moves along with the movement of the movable portion 292. The bar portion 275 moves in the back-and-forth direction along with the movement of the engaging portion 293. The fourth roller support portion 280 swings about the rotary shaft 141 (see Fig. 15) as the bar portion 275 moves. The fourth roller 234 moves in the vertical direction as the fourth roller support portion 280 swings.

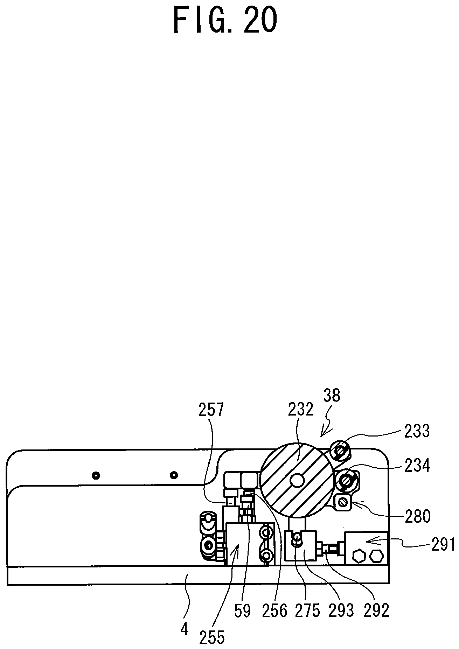

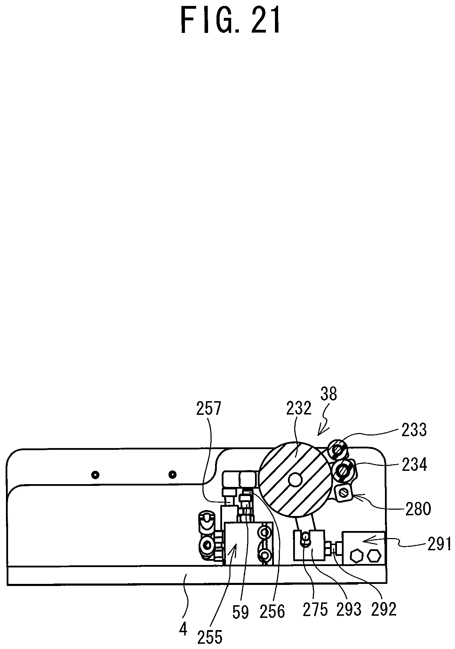

The positional relationship of the rollers 232 to 234 will be described with reference to Figs. 20 and 21. When the engaging portion 293 moves backward, the bar portion 275 moves backward. As shown in Fig. 20, when the bar portion 275 moves backward, the fourth roller support portion 280 swings and the fourth roller 234 moves downward. The third roller 233 and the fourth roller 234 separate from each other. Thus, even when the second roller 232 rotates, the rotation drive force of the second roller 232 is not transmitted to the third roller 233 via the fourth roller 234.

When the engaging portion 293 moves forward, the bar portion 275 moves forward. As shown in Fig. 21, when the bar portion 275 moves forward, the fourth roller support portion 280 swings and the fourth roller 234 swings upward. The third roller 233 and the fourth roller 234 contact each other. Thus, when the second roller 232 rotates, the rotation drive force of the second roller 232 is transmitted to the third roller 233 via the fourth roller 234. Thus, the third roller 233 rotates.

The fourth roller 234 rotates in a direction reverse to the rotation direction of the second roller 232. The third roller 233 rotates in a direction reverse to the rotation direction of the fourth roller 234. Thus, the second roller 232 and the third roller 233 rotate in the same direction. The second roller 232 and the third roller 233 can feed the cloth in the same direction.

An operation of the bonding machine 5 during the bonding operation will be described. The worker places the lower cloth 152 between the nozzle 17 and the third roller 233 that projects from the hole 29 (see Fig. 13). The cloth bonding apparatus 1 moves the engaging portion 293 backward. The third roller 233 and the fourth roller 234 separate from each other. The third roller 233 can freely rotate. Therefore, the worker can easily insert the lower cloth 152 between the third roller 233 and the nozzle 17. The worker places the upper cloth 151 on the lower cloth 152. The lower cloth 152 and the upper cloth 151 oppose the nozzle 17, respectively.

The third roller 233 moves upward with the urging force of the spring 256. The third roller 233 presses the lower cloth 152 to the nozzle 17. The position of the third roller 233 in the vertical direction changes in accordance with the thickness of the lower cloth 152. The third roller 233 largely moves downward when the thickness of the cloth is large. The third roller 233 slightly moves downward when the thickness of the cloth is small. Thus, the cloth bonding apparatus 1 can always press the lower cloth 152 to the nozzle 17 with a constant force.

The second arm portion 254 (see Fig. 15) contacts the stopper 257 when the third roller 233 moves upward by a predetermined amount. The bridging portion 246 (see Fig. 15) contacts the movable portion 59 when the third roller 233 moves upward by a predetermined amount. Thus, the stopper 257 or the movable portion 59 supports the third roller support portion 230. Thus, the third roller 233 does not move upward beyond a predetermined limit.

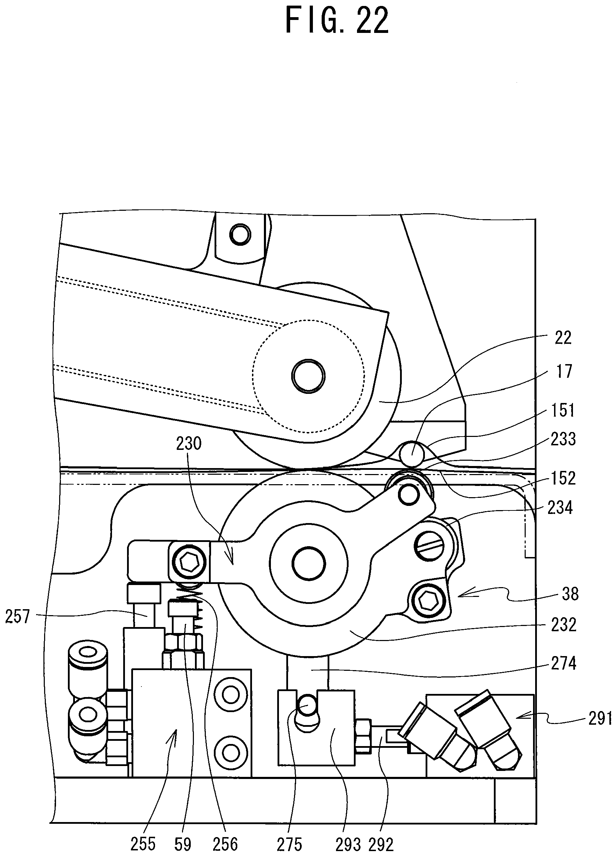

As shown in Fig. 22, the fourth roller 234 moves upward when the engaging portion 293 moves forward. The fourth roller 234 contacts the third roller 233. When the worker steps on and presses down the pedal 208 (see Fig. 1), the gear pump 124 (see Fig. 5) rotates. Thus, the adhesive is discharged from the nozzle 17 via the channel. The adhesive adheres to the lower cloth 152. The first roller 22 and the second roller 232 rotate along with the rotations of the second motor 92 and the third motor 93. The fourth roller 234 transmits the rotation drive force of the second roller 232 to the third roller 233. Thus, the third roller 233 also rotates. The third roller 233 feeds the lower cloth 152 placed between the third roller 233 and the nozzle 17 from front to back. The third roller 233 can feed the lower cloth 152 even when the downstream sides of the upper cloth 151 and the lower cloth 152 have not reached the first roller 22 and the second roller 232. Thus, the cloth bonding apparatus 1 can discharge the adhesive to the downstream sides of the lower cloth 152.

The upper cloth 151 and the lower cloth 152 fed the third roller 233 reaches the positions of the first roller 22 and the second roller 232. The first roller 22 and the second roller 232 press the upper cloth 151 and the lower cloth 152 in the vertical direction so that the upper cloth 151 and the lower cloth 152 are bonded together. The second roller 232 rotates in the same direction as the third roller 233 (in the direction in which the cloth is fed backward). Thus, the upper cloth 151 and the lower cloth 152 move from front to back.

As described above, in the second embodiment, the bonding machine 5 includes the fourth roller 234. The fourth roller 234 transmits the rotation drive force of the second roller 232 to the third roller 233. Thus, the third roller 233 can feed the cloth. The third roller 233 can feed the cloth backward even when the end portion arranged at the most downstream side in the cloth feeding direction has not reached both the rollers 22 and 232. Thus, the cloth bonding apparatus 1 can discharge the adhesive to adhere to an end of a cloth.

The third roller support portion 230 pulls the third roller 233 upward with a urging force of the spring 256. Therefore, the cloth bonding apparatus 1 can press the cloth to the nozzle 17 with a constant force with a simple configuration. The worker may not need to adjust the position of the nozzle 17 even when the thickness of the cloth has changed.

The position of the center of swing of the third roller support portion 230 is at the position of the center of rotation of the second roller 232. Thus, the second roller 232 and the third roller 233 do not contact each other even when the third roller 233 swings. The position of the center of rotation of the second roller 232 can be shared with the swing shaft of the third roller support portion 230. Thus, the configuration of the bonding machine 5 can be simplified and the bonding machine 5 can thus be made smaller.

The bonding machine 5 adjusts the position of the movable portion 59 thereby adjusting a gap between the nozzle 17 and the third roller 233. The bonding machine 5 adjusts the length of the stopper thereby adjusting the gap between the nozzle 17 and the third roller 233. Therefore, the worker can easily insert the cloth between the nozzle 17 and the third roller 233.

The third motor 93 that rotates the second roller 232 of Fig. 14 corresponds to the "drive portion" of the present invention. The third roller support portion 230 of Fig. 15 corresponds to the "first arm mechanism" of the present invention, the spring 256 corresponds to the "spring" of the present invention, and the third roller support portion 230 and the spring 256 correspond to the "biasing mechanism" of the present invention. The stopper 257 and the air cylinder 255 of Fig. 15 correspond to the "stopper" of the present invention. The fourth roller support portion 280 of Fig. 16 corresponds to the "second arm mechanism" of the present invention. The fourth roller 234 and the fourth roller support portion 280 of Fig. 16 correspond to the "transmitting portion" of the present invention. The air cylinder 291 of Fig. 17 corresponds to the "moving portion" of the present invention.

Examples in which the cloth bonding apparatus bonds separate pieces of cloths together are given in the above-described embodiment and the modified embodiment. However, the cloth bonding apparatus may bond folded portions of one folded cloth. In other words, the cloth bonding apparatus may bond two layers of cloth(s).

## Claims

1. A cloth bonding apparatus, comprising:
a nozzle (17) through which an adhesive is dischargeable onto a cloth (153); and
a feeding portion that is adapted to feed the cloth,
wherein the feeding portion comprises:
a first feeding portion (22) that is provided on a downstream side of the nozzle in a feeding direction of the cloth and positioned on a first side relative to the cloth to be fed;
a second feeding portion (25, 232) that is provided opposite to the first feeding portion and positioned on a second side, the second side being the other side opposite to the first side relative to the cloth;
a third feeding portion (28, 233) that is provided at a nozzle position or at an upstream side of the nozzle position in the feeding direction, the nozzle position being a position on the second side opposite to the nozzle;
a drive portion (93) that drives the second feeding portion or the third feeding portion; and
a transmitting portion (27, 234) that transmits a drive force of the second feeding portion driven by the drive portion to the third feeding portion, or transmits a drive force of the third feeding portion driven by the drive portion to the second feeding portion; wherein:
the first feeding portion comprises a roller (22);
the second feeding portion comprises a first pulley (25) that is provided opposite to the roller;
the third feeding portion comprises a second pulley (28); and
the transmitting portion comprises a belt (27) crossed between the first pulley and the second pulley,
**characterized in that**
the third feeding portion further comprises an urging mechanism (100, 106) that urges the second pulley toward the nozzle,
the urging mechanism comprises:
an arm mechanism (100) that rotatably supports the second pulley at an end portion thereof and swings about a rotary shaft (141) of the first pulley; and
a spring (106) that is connected to the arm mechanism.

2. The cloth bonding apparatus according to claim 1, further comprising a stopper (105) that restricts the arm mechanism from swinging to thereby restrict the second pulley from moving toward the nozzle.

3. The cloth bonding apparatus according to claim 2, wherein the stopper can adjust a swingable range of the arm mechanism.

4. The cloth bonding apparatus according to claim 3, wherein the stopper comprises an air cylinder (105).

5. The cloth bonding apparatus according to any one of claims 1 to 4, wherein a flange (34, 35) is provided to at least one of the first pulley and the second pulley.

6. The cloth bonding apparatus according to claim 5, wherein a height of the flange is lower than a thickness of the belt crossed between the first pulley and the second pulley.

7. A cloth bonding apparatus, comprising:
a nozzle (17) through which an adhesive is dischargeable onto a cloth (153); and
a feeding portion that is adapted to feed the cloth,
wherein the feeding portion comprises:
a first feeding portion (22) that is provided on a downstream side of the nozzle in a feeding direction of the cloth and positioned on a first side relative to the cloth to be fed;
a second feeding portion (25, 232) that is provided opposite to the first feeding portion and positioned on a second side, the second side being the other side opposite to the first side relative to the cloth;
a third feeding portion (28, 233) that is provided at a nozzle position or at an upstream side of the nozzle position in the feeding direction, the nozzle position being a position on the second side opposite to the nozzle;
a drive portion (93) that drives the second feeding portion or the third feeding portion; and
a transmitting portion (27, 234) that transmits a drive force of the second feeding portion driven by the drive portion to the third feeding portion, or transmits a drive force of the third feeding portion driven by the drive portion to the second feeding portion;
wherein the first feeding portion comprises a first roller (22),
**characterized in that**
the second feeding portion comprises a second roller (232) that is provided opposite to the first roller;
the third feeding portion comprises a third roller (233) that is provided opposite to the nozzle;
the drive portion drives the second roller to rotate;
the transmitting portion comprises a fourth roller (234) that can be arranged to contact with the second roller and the third roller;
in a state in which the second roller and the third roller are in contact with the fourth roller, the drive portion drives the second roller to rotate, the second roller rotates the fourth roller, and the fourth roller rotates the third roller, so that a rotation drive force of the drive portion is transmitted to the third roller;
the third feeding portion further comprises an urging mechanism (230, 256) that urges the third roller toward the nozzle, and
the urging mechanism comprises:
a first arm mechanism (230) that rotatably supports the third roller at an end portion thereof and swings about a rotary shaft of the second roller; and
a spring (256) that is connected to the first arm mechanism.

8. The cloth bonding apparatus according to claim 7, further comprising a stopper (255) that restricts the first arm mechanism from swinging to thereby restrict the third roller from moving toward the nozzle.

9. The cloth bonding apparatus according to claim 8, wherein the stopper can adjust a swingable range of the first arm mechanism.

10. The cloth bonding apparatus according to claim 9, wherein the stopper comprises an air cylinder (255).

11. The cloth bonding apparatus according to claim 7, wherein the transmitting portion comprises a second arm mechanism (280) that rotatably supports the fourth roller at an end portion thereof and swings about the rotary shaft of the second roller.

12. The cloth bonding apparatus according to claim 11, further comprising a moving portion (291) that moves the second arm mechanism to a position where the third roller and the fourth roller contact each other and to a position where the third roller and the fourth roller do not contact each other.

## Patentansprüche

1. Tuchfügegerät mit:
einer Düse (17), durch die ein Klebemittel auf ein Tuch (153) auslassbar ist; und
einem Förderabschnitt, der daran angepasst ist, das Tuch zu fördern,
wobei der Förderabschnitt Folgendes aufweist:
einen ersten Förderabschnitt (22), der an einer stromabwärtigen Seite der Düse in einer Förderrichtung des Tuchs vorgesehen und an einer ersten Seite bezüglich des zu fördernden Tuchs positioniert ist;
einen zweiten Förderabschnitt (25, 232), der gegenüber dem ersten Förderabschnitt vorgesehen und an einer zweiten Seite positioniert ist, wobei die zweite Seite die andere Seite des Tuchs ist, die der ersten Seite entgegengesetzt ist;
einen dritten Förderabschnitt (28, 233), der an einer Düsenposition oder an einer stromaufwärtigen Seite der Düsenposition in der Förderrichtung vorgesehen ist, wobei die Düsenposition eine Position an der zweiten Seite gegenüber der Düse ist;
einen Antriebsabschnitt (93), der den zweiten Förderabschnitt oder den dritten Förderabschnitt antreibt; und
einen Übertragungsabschnitt (27, 234), der eine Antriebskraft des zweiten Förderabschnitts, der durch den Antriebsabschnitt angetrieben wird, zu dem dritten Förderabschnitt überträgt, oder der eine Antriebskraft des dritten Förderabschnitts, der durch den Antriebsabschnitt angetrieben wird, zu dem zweiten Förderabschnitt überträgt; wobei:
der erste Förderabschnitt eine Walze (22) aufweist;
der zweite Förderabschnitt eine erste Riemenscheibe (25) aufweist, die gegenüber der Walze vorgesehen ist;
der dritte Förderabschnitt eine zweite Riemenscheibe (28) aufweist; und
der Übertragungsabschnitt einen Riemen (27) aufweist, der zwischen der ersten Riemenscheibe und der zweiten Riemenscheibe gespannt ist,
**dadurch gekennzeichnet, dass**
der dritte Förderabschnitt des Weiteren einen Drückmechanismus (100, 106) aufweist, der die zweite Riemenscheibe zu der Düse drückt,
wobei der Drückmechanismus Folgendes aufweist:
einen Armabschnitt (100), der die zweite Riemenscheibe an seinem Endabschnitt drehbar stützt und um eine Drehwelle (141) der ersten Riemenscheibe schwenkt; und
eine Feder (106), die mit dem Armmechanismus verbunden ist.

2. Tuchfügegerät gemäß Anspruch 1, des Weiteren mit einem Stopper (105), der ein Schwenken des Armmechanismus' begrenzt, um dadurch eine Bewegung der zweiten Riemenscheibe zu der Düse zu begrenzen.

3. Tuchfügegerät gemäß Anspruch 2, wobei der Stopper einen schwenkbaren Bereich des Armmechanismus' einstellen kann.

4. Tuchfügegerät gemäß Anspruch 3, wobei der Stopper einen Luftzylinder (105) aufweist.

5. Tuchfügegerät gemäß einem der Ansprüche 1 bis 4, wobei ein Flansch (34, 35) zumindest entweder an der ersten Riemenscheibe oder der zweiten Riemenscheibe vorgesehen ist.

6. Tuchfügegerät gemäß Anspruch 5, wobei eine Höhe des Flanschs niedriger ist als eine Dicke des Riemens, der zwischen der ersten Riemenscheibe und der zweiten Riemenscheibe gespannt ist.

7. Tuchfügegerät mit:
einer Düse (17), durch die ein Klebemittel auf ein Tuch (153) auslassbar ist; und
einem Förderabschnitt, der daran angepasst ist, das Tuch zu fördern,
wobei der Förderabschnitt Folgendes aufweist:
einen ersten Förderabschnitt (22), der an einer stromabwärtigen Seite der Düse in einer Förderrichtung des Tuchs vorgesehen und an einer ersten Seite bezüglich des zu fördernden Tuchs positioniert ist;
einen zweiten Förderabschnitt (25, 232), der gegenüber dem ersten Förderabschnitt vorgesehen und an einer zweiten Seite positioniert ist, wobei die zweite Seite die andere Seite des Tuchs ist, die der ersten Seite entgegengesetzt ist;
einen zweiten Förderabschnitt (25, 232), der gegenüber dem ersten Förderabschnitt vorgesehen und an einer zweiten Seite positioniert ist, wobei die zweite Seite die andere Seite des Tuchs ist, die der ersten Seite entgegengesetzt ist;
einen dritten Förderabschnitt (28, 233), der an einer Düsenposition oder an einer stromaufwärtigen Seite der Düsenposition in der Förderrichtung vorgesehen ist, wobei die Düsenposition eine Position an der zweiten Seite gegenüber der Düse ist;
einen Antriebsabschnitt (93), der den zweiten Förderabschnitt oder den dritten Förderabschnitt antreibt; und
einen Übertragungsabschnitt (27, 234), der eine Antriebskraft des zweiten Förderabschnitts, der durch den Antriebsabschnitt angetrieben wird, zu dem dritten Förderabschnitt überträgt, oder der eine Antriebskraft des dritten Förderabschnitts, der durch den Antriebsabschnitt angetrieben wird, zu dem zweiten Förderabschnitt überträgt;
wobei der erste Förderabschnitt eine erste Walze (22) aufweist,
**dadurch gekennzeichnet, dass**
der zweite Förderabschnitt eine zweite Walze (232) aufweist, die gegenüber der ersten Walze vorgesehen ist;
der dritte Förderabschnitt eine dritte Walze (233) aufweist, die gegenüber der Düse vorgesehen ist;
der Antriebsabschnitt die zweite Walze drehend antreibt;
der Übertragungsabschnitt eine vierte Walze (234) aufweist, die so angeordnet werden kann, dass sie mit der zweiten Walze und der dritten Walze in Kontakt ist;
in einem Zustand, in dem die zweite Walze und die dritte Walze mit der vierten Walze in Kontakt sind, der Antriebsabschnitt die zweite Walze drehend antreibt, die zweite Walze die vierte Walze dreht und die vierte Walze die dritte Walze dreht, so dass eine Drehantriebskraft des Antriebsabschnitts zu der dritten Walze übertragen wird;
der dritte Förderabschnitt des Weiteren einen Drückmechanismus (230, 256) aufweist, der die dritte Walze zu der Düse drückt, und
der Drückmechanismus Folgendes aufweist:
einen ersten Armmechanismus (230), der die dritte Walze an seinem Endabschnitt drehbar stützt und um eine Drehwelle der zweiten Walze schwenkt; und
eine Feder (256), die mit dem ersten Armmechanismus verbunden ist.

8. Tuchfügegerät gemäß Anspruch 7, des Weiteren mit einem Stopper (255), der ein Schwenken des ersten Armmechanismus' begrenzt, um dadurch eine Bewegung der dritten Walze zu der Düse zu begrenzen.

9. Tuchfügegerät gemäß Anspruch 8, wobei der Stopper einen schwenkbaren Bereich des ersten Armmechanismus' einstellen kann.

10. Tuchfügegerät gemäß Anspruch 9, wobei der Stopper einen Luftzylinder (255) aufweist.

11. Tuchfügegerät gemäß Anspruch 7, wobei der Übertragungsabschnitt einen zweiten Armmechanismus (280) aufweist, der die vierte Walze an seinem Endabschnitt drehbar stützt, und der um die Drehwelle der zweiten Walze schwenkt.

12. Tuchfügegerät gemäß Anspruch 11, des Weiteren mit einem Bewegungsabschnitt (291), der den zweiten Armmechanismus zu einer Position, an der die dritte Walze und die vierte Walze miteinander in Kontakt sind, und zu einer Position bewegt, an der die dritte Walze und die vierte Walze nicht miteinander in Kontakt sind.

## Revendications

1. Appareil de liaison de tissus, comprenant :
une buse (17) à travers laquelle un adhésif peut être déchargé sur un tissu (153) ; et
une partie d'alimentation qui est adaptée pour fournir le tissu,
dans lequel la partie d'alimentation comprend :
une première partie d'alimentation (22) qui est prévue sur un côté en aval de la buse dans une direction de fourniture du tissu et positionnée sur un premier côté relatif au tissu à fournir ;
une deuxième partie d'alimentation (25, 232) qui est prévue à l'opposé de la première partie d'alimentation et positionnée sur un second côté, le second côté étant l'autre côté opposé au premier côté relatif au tissu ;
une troisième partie d'alimentation (28, 233) qui est prévue au niveau d'une position de buse ou d'un côté amont de la position de buse dans la direction de fourniture, la position de buse étant une position sur le second côté opposé à la buse ;
une partie d'entraînement (93) qui entraîne la deuxième partie d'alimentation ou la troisième partie d'alimentation ; et
une partie de transmission (27, 234) qui transmet une force d'entraînement de la deuxième partie d'alimentation entraînée par la partie d'entraînement à la troisième partie d'alimentation, ou transmet une force d'entraînement de la troisième partie d'alimentation entraînée par la partie d'entraînement à la deuxième partie d'alimentation ; dans lequel :
la première partie d'alimentation comprend un rouleau (22) ;
la deuxième partie d'alimentation comprend une première poulie (25) qui est prévue à l'opposé du rouleau ;
la troisième partie d'alimentation comprend une seconde poulie (28) ; et
la partie de transmission comprend une courroie (27) croisée entre la première et la seconde poulie,
**caractérisé en ce que**
la troisième partie d'alimentation comprend en outre un mécanisme de poussée (100, 106) qui pousse la seconde poulie vers la buse,
le mécanisme de poussée comprend :
un mécanisme de bras (100) qui supporte en rotation la seconde poulie sur une partie d'extrémité de celui-ci et oscille autour d'un arbre rotatif (141) de la première poulie ; et
un ressort (106) qui est raccordé au mécanisme de bras.

2. Appareil de liaison de tissus selon la revendication 1, comprenant en outre une butée (105) qui restreint le mécanisme de bras dans son oscillation pour ainsi restreindre la seconde poulie dans son déplacement vers la buse.

3. Appareil de liaison de tissus selon la revendication 2, dans lequel la butée peut ajuster une plage pouvant osciller du mécanisme de bras.

4. Appareil de liaison de tissus selon la revendication 3, dans lequel la butée comprend un cylindre à air (105).

5. Appareil de liaison de tissus selon l'une quelconque des revendications 1 à 4, dans lequel une bride (34, 35) est prévue sur au moins une de la première poulie et de la seconde poulie.

6. Appareil de liaison de tissus selon la revendication 5, dans lequel une hauteur de la bride est inférieure à une épaisseur de la courroie croisée entre la première poulie et la seconde poulie.

7. Appareil de liaison de tissus, comprenant :
une buse (17) à travers laquelle un adhésif peut être déchargé sur un tissu (153) ; et
une partie d'alimentation qui est adaptée pour fournir le tissu,
dans lequel la partie d'alimentation comprend :
une première partie d'alimentation (22) qui est prévue sur un côté aval de la buse dans une direction de fourniture du tissu et positionnée sur un premier côté relatif au tissu à fournir ;
une deuxième partie d'alimentation (25, 232) qui est prévue à l'opposé de la première partie d'alimentation et positionnée sur un second côté, le second côté étant l'autre côté opposé au premier côté relatif au tissu ;
une troisième partie d'alimentation (28, 233) qui est prévue au niveau d'une position de buse ou d'un côté amont de la position de buse dans la direction de fourniture, la position de buse étant une position sur le second côté opposé à la buse ;
une partie d'entraînement (93) qui entraîne la deuxième partie d'alimentation ou la troisième partie d'alimentation ; et
une partie de transmission (27, 234) qui transmet une force d'entraînement de la deuxième partie d'alimentation entraînée par la partie d'entraînement à la troisième partie d'alimentation, ou transmet une force d'entraînement de la troisième partie d'alimentation entraînée par la partie d'entraînement à la deuxième partie d'alimentation ;
dans lequel la première partie d'alimentation comprend un premier rouleau (22),
**caractérisé en ce que**
la deuxième partie d'alimentation comprend un deuxième rouleau (232) qui est prévu à l'opposé du premier rouleau ;
la troisième partie d'alimentation comprend un troisième rouleau (233) qui est prévu à l'opposé de la buse ;
la partie d'entraînement entraîne le deuxième rouleau en rotation ;
la partie de transmission comprend un quatrième rouleau (234) qui peut être agencé pour mettre en contact le deuxième rouleau et le troisième rouleau ;
dans un état dans lequel le deuxième rouleau et le troisième rouleau sont en contact avec le quatrième rouleau, la partie d'entraînement entraîne le deuxième rouleau en rotation, le deuxième rouleau fait tourner le quatrième rouleau, et le quatrième rouleau fait tourner le troisième rouleau, de telle manière qu'une force d'entraînement en rotation de la partie d'entraînement est transmise au troisième rouleau ;
la troisième partie d'alimentation comprend en outre un mécanisme de poussée (230, 256) qui pousse le troisième rouleau vers la buse, et
le mécanisme de poussée comprend :
un premier mécanisme de bras (230) qui supporte en rotation le troisième rouleau sur une partie d'extrémité de celui-ci et oscille autour d'un arbre rotatif du deuxième rouleau ; et
un ressort (256) qui est raccordé au premier mécanisme de bras.

8. Appareil de liaison de tissus selon la revendication 7, comprenant en outre une butée (255) qui restreint le premier mécanisme de bras dans son oscillation pour ainsi restreindre le troisième rouleau dans son déplacement vers la buse.

9. Appareil de liaison de tissus selon la revendication 8, dans lequel la butée peut ajuster une plage d'oscillation du premier mécanisme de bras.

10. Appareil de liaison de tissus selon la revendication 9, dans lequel la butée comprend un cylindre à air (255).

11. Appareil de liaison de tissus selon la revendication 7, dans lequel la partie de transmission comprend un second mécanisme de bras (280) qui supporte en rotation le quatrième rouleau sur une partie d'extrémité de celui-ci et oscille autour de l'arbre rotatif du deuxième rouleau.

12. Appareil de liaison de tissus selon la revendication 11, comprenant en outre une partie mobile (291) qui déplace le second mécanisme de bras vers une position où le troisième rouleau et le quatrième rouleau sont en contact l'un avec l'autre et vers une position où le troisième rouleau et le quatrième rouleau ne sont pas en contact l'un avec l'autre.
